# EUROPEAN PATENT APPLICATION

(11) **EP 2 003 895 A2**
(43) Date of publication of application: **17.12.2008**
(21) Application number: 08157439.4
(22) Date of filing: 02.06.2008
(51) Int. Cl.: H04N 7/24

(54) **Audio stream processing method, playback apparatus, and output apparatus with calculation of missing PTS display time stamps**

(30) Priority: 15.06.2007 JP 2007158887
(71) Applicant: Kabushiki Kaisha Toshiba, Minato-ku, Tokyo 105-8001 (JP)
(72) Inventor: Mukaide, Takanobu, Tokyo 105-8001 (JP)
(74) Representative: Henkel, Feiler & Hänzel

(57) **Abstract**

The invention is made to generate time information, when no time information is appended to a header of a data unit obtained by packing a plurality of audio streams upon transferring that data unit. To this end, data obtained by packing a plurality of audio streams together with playback time information (PTS) is transferred as data of one unit. When no PTS is appended to the header (header HDR of UNITb) of the data of one unit, new time information (new PTSb) is calculated from time information (PTS2) immediately before the HDR of UNITb (arrowed route c1).

## Description

The invention relates to an audio stream processing method, playback apparatus, and output apparatus upon transferring a data unit obtained by packing a plurality of audio streams.

In particular, the invention relates to a method of calculating header time information for each packing data suited to a case in which high-bit rate audio data is output via a digital interface such as HDMI (High-Definition Multimedia Interface) or the like.

A related art which aims at implementing video & audio synchronous playback, playback from the middle, and repeat playback for an AV stream to which no presentation time stamp (PTS) is appended is known (JP-A 2006-352587 (KOKAI)).

In JP-A 2006-352587 (KOKAI), an AV stream to which no PTS is appended is received, and is demultiplexed into encoded video data and encoded audio data. As for the encoded audio data, the next PTS is calculated based on the immediately preceding PTS and a bit rate.

When data is simply output based on appended time information (PTS), a player may output halfway data when it executes playback transition (to transit with reference to time information), or it may take much time until data detection on the external audio decoding device side, thus posing adverse effects. For example, when a player pauses playback, it outputs data halfway through, and pauses the playback. When the playback is restarted from this state, data output is restarted from the halfway position, and the external audio decoding device side cannot normally process data and may output noise or needs much time until the beginning of audio output.

One object of the embodiments is to generate time information when the time information is not appended to the header of a data unit upon transferring the data unit obtained by packing a plurality of audio streams, so as to solve the problems described in "Description of the Related Art".

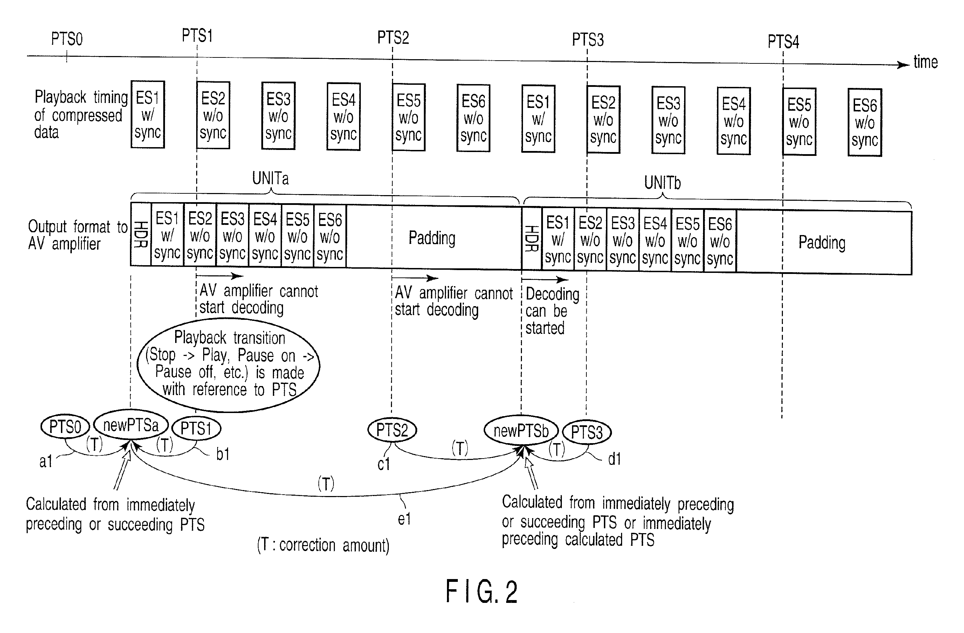

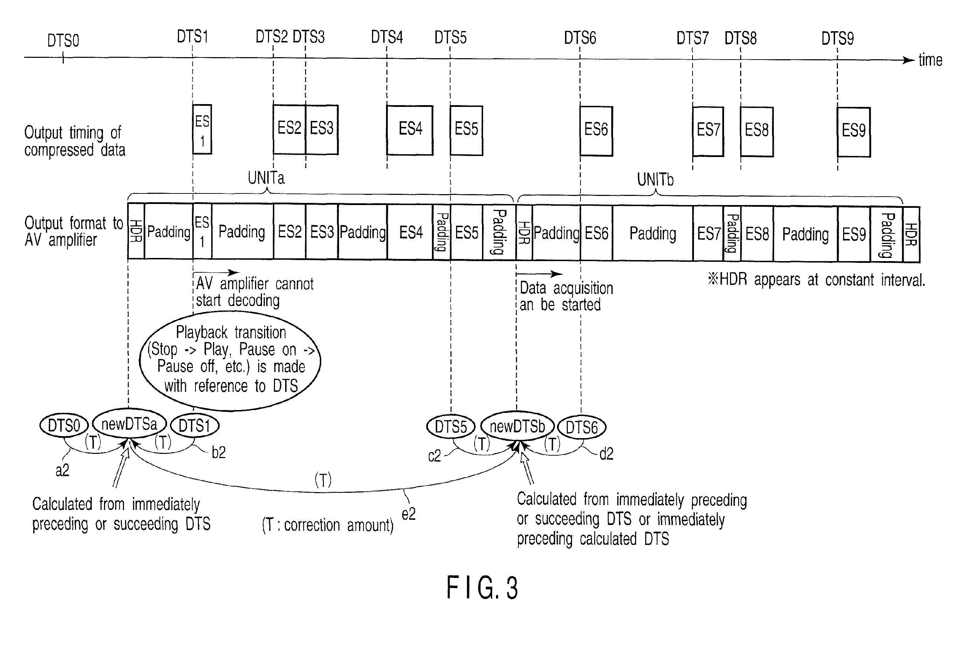

In one embodiment, a plurality of audio streams (A_ES) are packed together with playback or decoding start time information (PTS or DTS) into data of one unit (UNIT), and that data of one unit is transferred. If no time information (PTS or DTS) is appended to the header of the data of one unit (e.g., HDR of UNITb in FIG. 2 or 3), one of the following calculation processes is executed.
(1.1) New time information (new PTSb in FIG. 2 or new DTSb in FIG. 3) corresponding to the header (HDR) of the data of one unit (UNITb) to which no time information (PTS or DTS) is appended is calculated based on the time information (PTS2 in FIG. 2 or DTS5 in FIG. 3) immediately before the header (HDR) of the data of one unit (UNITb) to which no time information (PTS or DTS) is appended (arrowed route c1 in FIG. 2 or arrowed route c2 in FIG. 3).
(1.2) New time information (new PTSb in FIG. 2 or new DTSb in FIG. 3) corresponding to the header (HDR) of the data of one unit (UNITb) to which no time information (PTS or DTS) is appended is calculated based on the time information (PTS3 in FIG. 2 or DTS6 in FIG. 3) immediately after the header (HDR) of the data of one unit (UNITb) to which no time information (PTS or DTS) is appended (arrowed route d1 in FIG. 2 or arrowed route d2 in FIG. 3).
(1.3) New time information (new PTSb in FIG. 2 or new DTSb in FIG. 3) corresponding to the header (HDR) of the data of one unit (UNITb) to which no time information (PTS or DTS) is appended is calculated based on time information (new PTSa calculated from PTS0 or PTS1 in FIG. 2; new DTSa calculated from DTS0 or DTS1 in FIG. 3) of a header (HDR) of data of one unit (UNITa in FIG. 2 or 3) immediately before the data of one unit (UNITb) to which no time information (PTS or DTS) is appended (arrowed route e1 in FIG. 2 or arrowed route e2 in FIG. 3).

In one embodiment, since time information can be assured for a data unit which has no time information for its header, garbage data upon playback transition can be prevented from being output, or decoding on the decoder side can be smoothly started.

The invention can be more fully understood from the following detailed description when taken in conjunction with the accompanying drawings, in which:
FIG. 1 is an exemplary block diagram explaining a playback apparatus according to one embodiment;
FIG. 2 is an exemplary view conceptually explaining a PTS calculation method according to one embodiment;
FIG. 3 is an exemplary view conceptually explaining a DTS calculation method according to one embodiment;
FIG. 4 is an exemplary flowchart explaining the PTS or DTS calculation sequence according to one embodiment; and
FIG. 5 is an exemplary flowchart explaining the PTS or DTS calculation sequence according to another embodiment.

Various embodiments according to the invention will be described hereinafter with reference to the accompanying drawings.

One object of the embodiments is to generate time information when the time information is not appended to the header of a data unit upon transferring the data unit obtained by packing a plurality of audio streams, so as to solve the problems described in "Description of the Related Art".

In one embodiment, a plurality of audio streams (A_ES) are packed together with playback or decoding start time information (PTS or DTS) into data of one unit (UNIT), and that data of one unit is transferred. If no time information (PTS or DTS) is appended to the header of the data of one unit (e.g., HDR of UNITb in FIG. 2 or 3), one of the following calculation processes is executed.
(1.1) New time information (new PTSb in FIG. 2 or new DTSb in FIG. 3) corresponding to the header (HDR) of the data of one unit (UNITb) to which no time information (PTS or DTS) is appended is calculated based on the time information (PTS2 in FIG. 2 or DTS5 in FIG. 3) immediately before the header (HDR) of the data of one unit (UNITb) to which no time information (PTS or DTS) is appended (arrowed route c1 in FIG. 2 or arrowed route c2 in FIG. 3).
(1.2) New time information (new PTSb in FIG. 2 or new DTSb in FIG. 3) corresponding to the header (HDR) of the data of one unit (UNITb) to which no time information (PTS or DTS) is appended is calculated based on the time information (PTS3 in FIG. 2 or DTS6 in FIG. 3) immediately after the header (HDR) of the data of one unit (UNITb) to which no time information (PTS or DTS) is appended (arrowed route d1 in FIG. 2 or arrowed route d2 in FIG. 3).
(1.3) New time information (new PTSb in FIG. 2 or new DTSb in FIG. 3) corresponding to the header (HDR) of the data of one unit (UNITb) to which no time information (PTS or DTS) is appended is calculated based on time information (new PTSa calculated from PTS0 or PTS1 in FIG. 2; new DTSa calculated from DTS0 or DTS1 in FIG. 3) of a header (HDR) of data of one unit (UNITa in FIG. 2 or 3) immediately before the data of one unit (UNITb) to which no time information (PTS or DTS) is appended (arrowed route e1 in FIG. 2 or arrowed route e2 in FIG. 3).

In one embodiment, since time information can be assured for a data unit which has no time information for its header, garbage data upon playback transition can be prevented from being output, or decoding on the decoder side can be smoothly started.

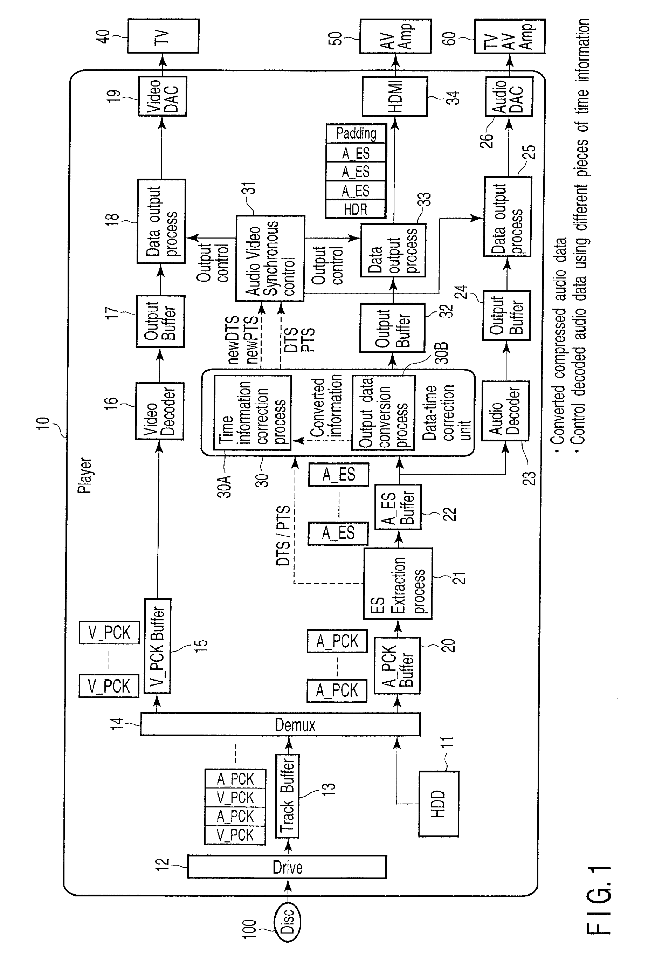

Various embodiments will be described below with reference to the drawings. FIG. 1 is an exemplary block diagram explaining a playback apparatus according one embodiment. Multiplexed video & audio compressed data, which is recorded on optical disc 100 or the like is read out from drive device 12 onto buffer 13, and Demux processor (demultiplexer) 14 demultiplexes the readout data into a compressed video stream (video pack V_PCK) and compressed audio stream (audio pack A_PCK). Alternatively, demultiplexer 14 demultiplexes similar data read out from hard disc (HDD) 11 (or externally supplied via a communication terminal (not shown)) into a compressed video stream (video pack V_PCK) and compressed audio stream (audio pack A_PCK). (Note that an audio stream can include non-compressed linear PCM data.)

The demultiplexed compressed video stream is sent to video decoder 16 via video buffer (V_PCK buffer) 15, and is decoded. The compressed audio stream is sent to audio decoder 23 via audio buffer (A_PCK buffer) 20, elementary stream extraction processor (ES extraction process) 21, and audio elementary stream buffer (A_ES buffer) 22, and is decoded.

The decoded video stream is sent to video DAC 19 via output buffer 17 and data output processor 18, and is digital-to-analog converted according to time information (PTS: Presentation Time Stamp or DTS: Decode Time Stamp). Then, the analog video signal is output to video display device (TV) 40 or the like.
The decoded audio stream is sent to audio DAC 26 via output buffer 24 and data output processor 25, and is digital-to-analog converted according to time information (PTS or DTS). Then, the analog audio signal is output to TV·AV amplifier 60 or the like.

Furthermore, the compressed audio stream (A_ES) before decoding undergoes a predetermined conversion process in data·time correction unit (including time information correction processor 30A and output data conversion processor 30B in the form of firmware or the like) 30, and is then sent to digital output interface (HDMI or the like) 34 via output buffer 32 and data output processor 33. This audio stream is output to external audio decoding device (HDMI compatible AV amplifier) 60 in accordance with time information (PTS or DTS) via HDMI 34. This embodiment relates to a playback control method upon outputting the compressed audio stream via digital output interface 34.

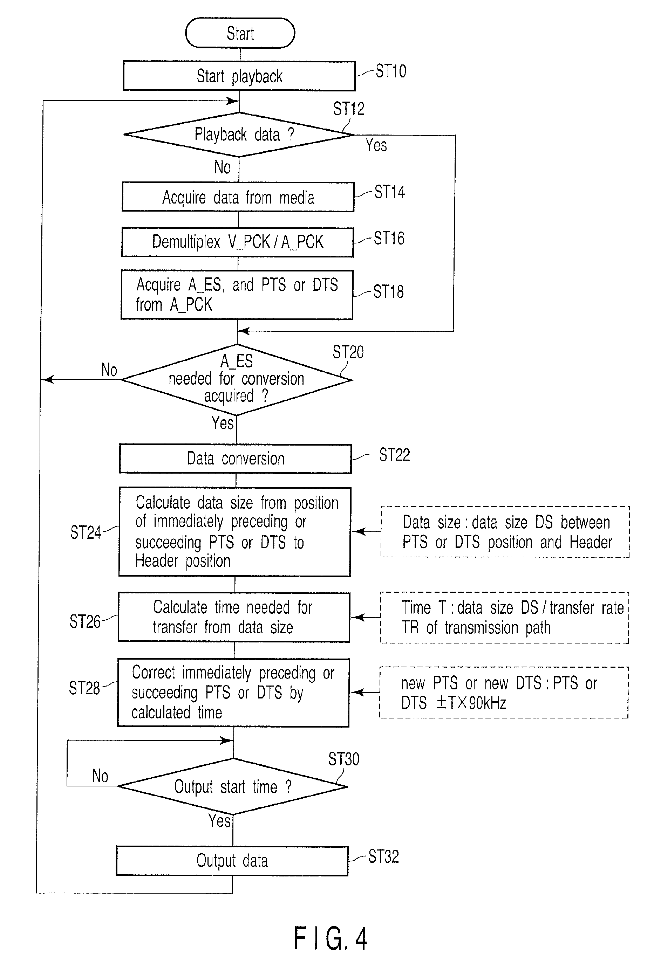

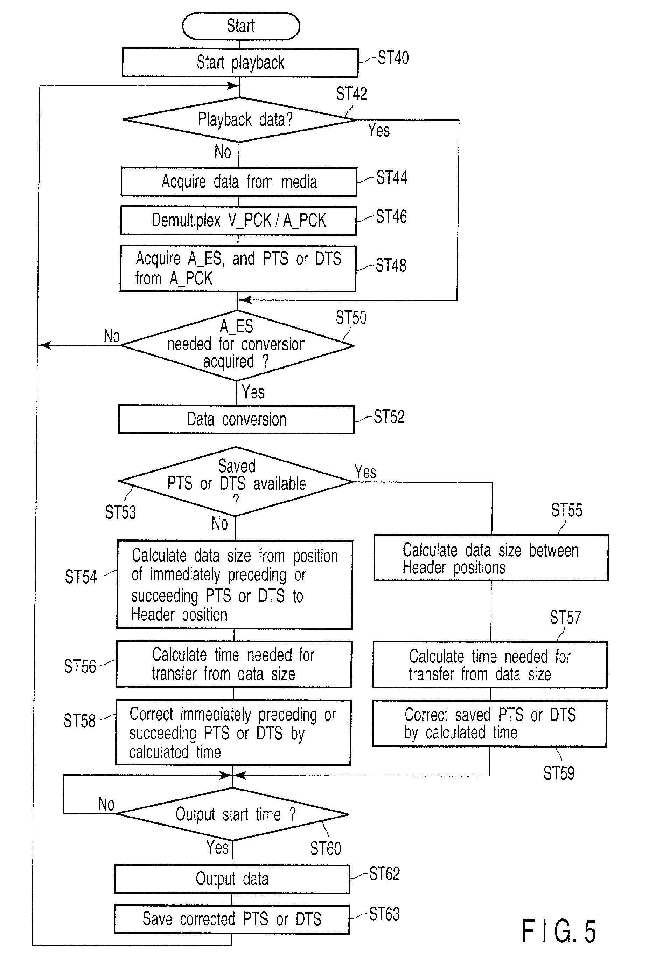

Note that the firmware of time information correction processor 30A provides a processing function of generating time information (new PTS or new DTS) when time information (PTS or DTS) is not appended to a header (HDR) of data of one unit (UNIT), which will be described later with reference to FIG. 2 and succeeding figures (see ST24 to ST28 in FIG. 4 or ST53 to ST59 in FIG. 5). The audio stream input to the ES extraction processor 21 may include a plurality of audio streams of different types (AC-3, MPEG audio, DTS-HD, and the like). The firmware of output data conversion processor 30B provides a processing function of extracting an audio stream of a desired type (e.g., DTS-HD) and passing the extracted audio stream to the data output processor (see ST20 to ST22 in FIG. 4 or ST50 to ST52 in FIG. 5).

FIG. 2 is an exemplary view conceptually explaining a PTS calculation method (time correction example of constant bit-rate compressed audio data) according to this embodiment. FIG. 2 exemplifies the relationship between the data configuration of constant bit-rate (CBR) compressed audio data, and time information. The example of FIG. 2 assumes that a plurality of compressed audio frames are packed starting with a compressed audio frame including specific sync information at the head, predetermined Header information (HDR) and Padding data are appended to the packed data to form data of one unit (UNIT with a constant size by appending Padding data), and the data of one unit is output to an external audio decoding device. Also, assume that it is not guaranteed that PTS is always appended to each compressed audio frame. FIG. 2 exemplifies a case in which no time information (PTS) needed to start the output process is appended to the header (HDR). Time information (new PTS) for the HDR to which no PTS is appended can be calculated by the following methods.
(a) The data of one unit (UNIT) is transferred at a predetermined constant transfer rate (TR), each audio stream (A_ES) in the data of one unit (UNIT) includes audio data which is encoded by a constant bit rate (CBR), and the time information can include a presentation time stamp (PTS) of the audio data. In this case, new time information (new PTSb = PTS2 + T in FIG. 2) corresponding to the header (HDR) of the data of one unit (UNITb) to which no time information (PTS) is appended is calculated by correcting the immediately preceding time information (PTS2 in FIG. 2) by time information (T = DS/TR) obtained by dividing a data size (DS) between the position of the immediately preceding time information (PTS2 in FIG. 2) and the position of the header (HDR) of the data of one unit (UNITb) to which no time information (PTS) is appended by the constant transfer rate (TR) (arrowed route c1 in FIG. 2).
(b) The data of one unit (UNIT) is transferred at a predetermined constant transfer rate (TR), each audio stream (A_ES) in the data of one unit (UNIT) includes audio data which is encoded by a constant bit rate (CBR), and the time information can include a presentation time stamp (PTS) of the audio data. In this case, new time information (new PTSb = PTS3 - T in FIG. 2) corresponding to the header (HDR) of the data of one unit (UNITb) to which no time information (PTS) is appended is calculated by correcting the immediately succeeding time information (PTS3 in FIG. 2) by time information (T = DS/TR) obtained by dividing a data size (DS) between the position of the immediately succeeding time information (PTS3 in FIG. 2) and the position of the header (HDR) of the data of one unit (UNITb) to which no time information (PTS) is appended by the constant transfer rate (TR) (arrowed route d1 in FIG. 2).
(c) The data of one unit (UNIT) is transferred at a predetermined constant transfer rate (TR), each audio stream (A_ES) in the data of one unit (UNIT) includes audio data which is encoded by a constant bit rate (CBR), and the time information can include a presentation time stamp (PTS) of the audio data. In this case, new time information (new PTSb = new PTSa + T in FIG. 2) corresponding to the header (HDR) of the data of one unit (UNITb) to which no time information (PTS) is appended is calculated by correcting time information (new PTSa in FIG. 2) of the header of immediately preceding data of one unit (UNITa in FIG. 2 or 3) by time information (T = DS*/TR) obtained by dividing a data size (DS*) of the data of one unit (UNIT) by the constant transfer rate (TR) (arrowed route e1 in FIG. 2).
   FIG. 3 is an exemplary view conceptually explaining a DTS calculation method (time correction example of variable bit-rate (VBR) compressed audio data) according to this embodiment. FIG. 3 exemplifies the relationship between the data configuration of a VBR compressed audio stream and time information. In general, a VBR compressed audio stream often produces a delay time needed for a decoding process unlike the CBR compressed audio stream. For this reason, to the VBR compressed audio stream, a DTS that means a decode start time is appended in place of the PTS. The example of FIG. 3 assumes that Padding data is inserted between neighboring compressed audio frames so as to start the output process at the decode start time of each compressed audio frame, predetermined header information is appended at a specific interval to form data of one unit (UNIT with a constant size) between pieces of neighboring Header information (between a certain HDR and next HDR), and the data of one unit is output to an external audio decoding device. In this example, no time information (DTS) needed to start the output processing is appended to the header (HDR). Time information (new DTS) for the HDR to which no DTS is appended can be calculated by the following methods.
(d) The data of one unit (UNIT) is transferred at a predetermined constant transfer rate (TR), each audio stream (A_ES) in the data of one unit (UNIT) includes audio data which is encoded by a variable bit rate (VBR), and the time information can include a decode time stamp (DTS) of the audio data. In this case, new time information (new DTSb = DTS5 + T in FIG. 3) corresponding to the header (HDR) of the data of one unit (UNITb) to which no time information (DTS) is appended is calculated by correcting the immediately preceding time information (DTS5 in FIG. 3) by time information (T = DS/TR) obtained by dividing a data size (DS) between the position of the immediately preceding time information (DTS5 in FIG. 3) and the position of the header (HDR) of the data of one unit (UNITb) to which no time information (DTS) is appended by the constant transfer rate (TR) (arrowed route c2 in FIG. 3).
(e) The data of one unit (UNIT) is transferred at a predetermined constant transfer rate (TR), each audio stream (A_ES) in the data of one unit (UNIT) includes audio data which is encoded by a variable bit rate (VBR), and the time information can include a decode time stamp (DTS) of the audio data. In this case, new time information (new DTSb = DTS6 - T in FIG. 3) corresponding to the header (HDR) of the data of one unit (UNITb) to which no time information (DTS) is appended is calculated by correcting the immediately succeeding time information (DTS6 in FIG. 3) by time information (T = DS/TR) obtained by dividing a data size (DS) between the position of the immediately succeeding time information (DTS6 in FIG. 3) and the position of the header (HDR) of the data of one unit (UNITb) to which no time information (DTS) is appended by the constant transfer rate (TR) (arrowed route d2 in FIG. 3).
(f) The data of one unit (UNIT) is transferred at a predetermined constant transfer rate (TR), each audio stream (A_ES) in the data of one unit (UNIT) includes audio data which is encoded by a variable bit rate (VBR), and the time information can include a decode time stamp (DTS) of the audio data. In this case, new time information (new DTSb = new DTSa + T in FIG. 3) corresponding to the header (HDR) of the data of one unit (UNITb) to which no time information (DTS) is appended is calculated by correcting time information (new DTSa in FIG. 3) of the header of immediately preceding data of one unit (UNITa in FIG. 3) by time information (T = DS*/TR) obtained by dividing a data size (DS*) of the data of one unit (UNIT) by the constant transfer rate (TR) (arrowed route e2 in FIG. 3).

In the case of FIG. 2 or 3, when data is simply output based on appended time information (PTS or DTS), a player may output halfway data when it executes playback transition (to transit with reference to time information), or it may take much time until data detection on the external audio decoding device side, thus posing adverse effects. For example, when a player pauses playback, it outputs data halfway through, and pauses the playback. When the playback is restarted from this state, data output is restarted from the halfway position, and the external audio decoding device side cannot normally process data and may output noise or needs much time until the beginning of audio output. To eliminate such adverse effects, in the embodiment shown in FIG. 1, data·time correction unit (an MPU installed with firmware 30A or 30B that executes the processing in FIG. 4 or 5, or the like) 30 corrects time information.

FIG. 4 is an exemplary flowchart explaining the PTS or DTS calculation (time information correction) sequence according to this embodiment. Upon starting playback (ST10), video data (V_PCK) and audio data (A_PCK) are demultiplexed (ST12 to ST16). Compressed audio frame A_ES and time information PTS/DTS are extracted from demultiplexed A_PCK (ST18). When compressed audio frames needed for data conversion are acquired (YES in ST20), a data conversion process needed to output the audio frames to an external audio decoding device (HDMI-connected external device or the like) is executed (ST22: a process by the firmware of output data conversion processor 30B in FIG. 1). A data size (DS) between time information located at a position immediately before or after Header (HDR) information and the Header information is calculated (ST24). Using a time (T) derived from this data size and a transfer rate (TR) upon data output (ST26), the immediately preceding or succeeding time information is corrected (ST28). Using the corrected time information (new PTS or new DTS) (ST30), the output process of the data that has undergone the data conversion process starts (ST32).

That is, for example, upon calculating header time information (presentation time stamp) new PTSb of UNITb in FIG. 2, it is calculated from PTS2 by correcting PTS2 by time information T corresponding to route c1 in the forward direction in time. Alternatively, new PTSb is calculated from PTS3 by correcting PTS3 by time information T corresponding to route d1 in the reverse direction in time. Also, new PTSb is calculated from new PTSa, which was calculated previously and saved, by correcting new PTSa by time information T corresponding to route e1 in the forward direction in time. For example, assume that a PTS as a basis for a new PTS calculation is represented by PTSx, the clock frequency of the system in the apparatus arrangement shown in FIG. 1 is 90 kHz, and a multiplication is expressed by *. Then, by selecting the sign in the correction calculation, the new PTS can be calculated by new PTS = PTSx ± T*90000.

Likewise, for example, upon calculating header time information (decode time stamp) new DTSb of UNITb in FIG. 3, it is calculated from DTS5 by correcting DTS5 by time information T corresponding to route c2 in the forward direction in time. Alternatively, new DTSb is calculated from DTS6 by correcting DTS6 by time information T corresponding to route d2 in the reverse direction in time. Also, new DTSb is calculated from new DTSa, which was calculated previously and saved, by correcting new DTSa by time information T corresponding to route e2 in the forward direction in time. For example, assume that a DTS as a basis for a new DTS calculation is represented by DTSx, the clock frequency of the system is 90 kHz, and a multiplication is expressed by *. Then, by selecting the sign in the correction calculation, the new DTS can be calculated by new DTS = DTSx ± T*90000.

FIG. 5 is an exemplary flowchart explaining the PTS or DTS calculation (time information correction) sequence according to another embodiment.
Even-numbered processing blocks ST40 to ST62 in FIG. 5 have the same contents as in processing blocks ST10 to ST32 in FIG. 4 described above. However, in the processing example of FIG. 5, odd-numbered processing blocks ST53 to ST63 are different from FIG. 4. That is, in the example of FIG. 4, correction is made using time information located immediately before or after Header (HDR) information. However, as in the example of FIG. 5, correction is made using immediately preceding or succeeding time information, immediately after the beginning of playback (ST54 to ST58). After that, correction is made based on time information (e.g., new PTSa in FIG. 2 or new DTSa in FIG. 3) calculated for the previous Header information.

In the processing of FIG. 5, when no time information is appended to the HDR of current UNITb, if time information (new PTSa or new DTSa) of the HDR of immediately preceding UNITa is saved in a memory (not shown: a register in data·time correction unit 30 in FIG. 1 can be used as that memory) (YES in ST53 after the process in ST63), a data size (DS*) from the HDR of UNITa to that of UNITb is calculated (ST55), and a time (T = DS*/TR) needed to transfer UNIT is calculated from the calculated data size and transfer rate TR (ST57). Time information is corrected using the calculated time (T) (ST59), and the output process of the data that has undergone the data conversion process is started (ST62) using the corrected time information (new PTS or new DTS) (ST60). After that, the newly calculated time information (new PTSb or new DTSb) of the HDR of UNITb is saved in the memory (not shown) (ST63).

That is, for example, upon calculating new PTSb in FIG. 2, new time information (new PTSb = new PTSa + T in FIG. 2) corresponding to the header (HDR) of data of one unit (UNITb) to which no time information (PTS) is appended can be calculated by correcting time information (new PTSa in FIG. 2) of the header (HDR) of the immediately preceding data of one unit (UNITa in FIG. 2) by time information (T = DS*/TR) obtained by dividing the data size (DS*) of data of one unit (UNIT) by a constant transfer rate (TR) (arrowed route e1 in FIG. 2).

Likewise, for example, upon calculating new DTSb in FIG. 3, new time information (new DTSb = new DTSa + T in FIG. 3) corresponding to the header (HDR) of data of one unit (UNITb) to which no time information (DTS) is appended can be calculated by correcting time information (new DTSa in FIG. 3) of the header (HDR) of the immediately preceding data of one unit (UNITa in FIG. 3) by time information (T = DS*/TR) obtained by dividing the data size (DS*) of data of one unit (UNIT) by a constant transfer rate (TR) (arrowed route e1 in FIG. 3).

By executing such correction processing of time information, control such as output start, output stop, and the like can be implemented with reference to Header information which can be detected as data by an external audio decoding device.

### <Summary>

In a playback apparatus which packs a plurality of compressed audio stream to form data of one unit, and outputs the data of one unit to an external audio decoding device, when playback start time information (PTS or DTS) is not appended to a compressed audio stream which is located at the head of the data of one unit,
1. a playback start time (new PTSx or new DTSx) of the packing data header position is calculated from the immediately preceding PTS or DTS;
2. a playback start time (new PTSx or new DTSx) of the packing data header position is calculated from the immediately succeeding PTS or DTS; or
3. a next playback start time (new PTSx+1 or new DTSx+1) is calculated from the playback start time (new PTSx or new DTSx) of the immediately preceding packing data header position.

By outputting data to an external audio decoding device based on the playback start time calculated by one of the aforementioned methods, garbage data due to playback transition can be prevented from being output, and decoding on the external audio decoding device side can be smoothly started.

### <Effects of Embodiments>

By appropriately correcting time information, and executing playback control based on the corrected time information (new PTS or new DTS), garbage data can be prevented from being output to a decoder (external audio decoding device) upon playback transition, or data detection errors and the like on the decoder side can be avoided to smoothly start decoding.

### <Correspondence Example Between Embodiments and Invention>

(1) In an audio stream processing method which transfers data of one unit (UNIT obtained by packing header HDR, a plurality of A_ESs, and appropriate padding data) obtained by packing a plurality of audio streams (A_ES) together with playback or decode start time information (PTS or DTS), when the time information (PTS or DTS) is not appended to the header of the data of one unit (e.g., HDR of UNITb in FIG. 2 or 3), the following calculation process is executed:
   (1.1) new time information (new PTSb in FIG. 2 or new DTSb in FIG. 3) corresponding to the header (HDR) of the data of one unit (UNITb) to which no time information (PTS or DTS) is appended is calculated from the time information (PTS2 in FIG. 2 or DTS5 in FIG. 3) immediately before the header (HDR) of the data of one unit (UNITb) to which no time information (PTS or DTS) is appended (arrowed route c1 in FIG. 2 or arrowed route c2 in FIG. 3; ST24 to ST28 in FIG. 4 or NO in ST53 and ST54 to ST58 in FIG. 5);
   (1.2) new time information (new PTSb in FIG. 2 or new DTSb in FIG. 3) corresponding to the header (HDR) of the data of one unit (UNITb) to which no time information (PTS or DTS) is appended is calculated from the time information (PTS3 in FIG. 2 or DTS6 in FIG. 3) immediately after the header (HDR) of the data of one unit (UNITb) to which no time information (PTS or DTS) is appended (arrowed route d1 in FIG. 2 or arrowed route d2 in FIG. 3; ST24 to ST28 in FIG. 4 or NO in ST53 and ST54 to ST58 in FIG. 5); or
   (1.3) new time information (new PTSb in FIG. 2 or new DTSb in FIG. 3) corresponding to the header (HDR) of the data of one unit (UNITb) to which no time information (PTS or DTS) is appended is calculated from time information (new PTSa calculated from PTS0 or PTS1 in FIG. 2; new DTSa calculated from DTS0 or DTS1 in FIG. 3) of a header (HDR) of data of one unit (UNITa in FIG. 2 or 3) immediately before the data of one unit (UNITb) to which no time information (PTS or DTS) is appended (arrowed route e1 in FIG. 2 or arrowed route e2 in FIG. 3; YES in ST53 and ST55 to ST59 in FIG. 5).
   That is, for example, upon calculating header time information (presentation time stamp) new PTSb of UNITb in FIG. 2, it is calculated from PTS2 by correcting PTS2 by time information T corresponding to route c1 in the forward direction in time. Alternatively, new PTSb is calculated from PTS3 by correcting PTS3 by time information T corresponding to route d1 in the reverse direction in time. Also, new PTSb is calculated from new PTSa, which was calculated previously and saved, by correcting new PTSa by time information T corresponding to route e1 in the forward direction in time.
   For example, assume that a PTS as a basis for a new PTS calculation is represented by PTSx, the clock frequency of the system in the apparatus arrangement shown in FIG. 1 is 90 kHz, and a multiplication is expressed by *. Then, by selecting the sign in the correction calculation, the new PTS can be calculated by new PTS = PTSx ± T*90000.
   Likewise, for example, upon calculating header time information (decode time stamp) new DTSb of UNITb in FIG. 3, it is calculated from DTS5 by correcting DTS5 by time information T corresponding to route c2 in the forward direction in time. Alternatively, new DTSb is calculated from DTS6 by correcting DTS6 by time information T corresponding to route d2 in the reverse direction in time. Also, new DTSb is calculated from new DTSa, which was calculated previously and saved, by correcting new DTSa by time information T corresponding to route e2 in the forward direction in time.
   For example, assume that a DTS as a basis for a new DTS calculation is represented by DTSx, the clock frequency of the system is 90 kHz, and a multiplication is expressed by *. Then, by selecting the sign in the correction calculation, the new DTS can be calculated by new DTS = DTSx ± T*90000.
(2) The data of one unit (UNIT) is transferred at a predetermined constant transfer rate (TR), each audio stream (A_ES) in the data of one unit (UNIT) includes audio data which is encoded by a constant bit rate (CBR), and the time information can include a presentation time stamp (PTS) of the audio data. In this case, new time information (new PTSb = PTS2 + T in FIG. 2) corresponding to the header (HDR) of the data of one unit (UNITb) to which no time information (PTS) is appended is calculated by correcting the immediately preceding time information (PTS2 in FIG. 2) by time information (T = DS/TR) obtained by dividing a data size (DS) between the position of the immediately preceding time information (PTS2 in FIG. 2) and the position of the header (HDR) of the data of one unit (UNITb) to which no time information (PTS) is appended by the constant transfer rate (TR) (arrowed route c1 in FIG. 2).
(3) The data of one unit (UNIT) is transferred at a predetermined constant transfer rate (TR), each audio stream (A_ES) in the data of one unit (UNIT) includes audio data which is encoded by a constant bit rate (CBR), and the time information can include a presentation time stamp (PTS) of the audio data. In this case, new time information (new PTSb = PTS3 - T in FIG. 2) corresponding to the header (HDR) of the data of one unit (UNITb) to which no time information (PTS) is appended is calculated by correcting the immediately succeeding time information (PTS3 in FIG. 2) by time information (T = DS/TR) obtained by dividing a data size (DS) between the position of the immediately succeeding time information (PTS3 in FIG. 2) and the position of the header (HDR) of the data of one unit (UNITb) to which no time information (PTS) is appended by the constant transfer rate (TR) (arrowed route d1 in FIG. 2).
(4) The data of one unit (UNIT) is transferred at a predetermined constant transfer rate (TR), each audio stream (A_ES) in the data of one unit (UNIT) includes audio data which is encoded by a constant bit rate (CBR), and the time information can include a presentation time stamp (PTS) of the audio data. In this case, new time information (new PTSb = new PTSa + T in FIG. 2) corresponding to the header (HDR) of the data of one unit (UNITb) to which no time information (PTS) is appended is calculated by correcting time information (new PTSa in FIG. 2) of the header of immediately preceding data of one unit (UNITa in FIG. 2) by time information (T = DS*/TR) obtained by dividing a data size (DS*) of the data of one unit (UNIT) by the constant transfer rate (TR) (arrowed route e1 in FIG. 2).
(5) The data of one unit (UNIT) is transferred at a predetermined constant transfer rate (TR), each audio stream (A_ES) in the data of one unit (UNIT) includes audio data which is encoded by a variable bit rate (VBR), and the time information can include a decode time stamp (DTS) of the audio data. In this case, new time information (new DTSb = DTS5 + T in FIG. 3) corresponding to the header (HDR) of the data of one unit (UNITb) to which no time information (DTS) is appended is calculated by correcting the immediately preceding time information (DTS5 in FIG. 3) by time information (T = DS/TR) obtained by dividing a data size (DS) between the position of the immediately preceding time information (DTS5 in FIG. 3) and the position of the header (HDR) of the data of one unit (UNITb) to which no time information (DTS) is appended by the constant transfer rate (TR) (arrowed route c2 in FIG. 3).
(6) The data of one unit (UNIT) is transferred at a predetermined constant transfer rate (TR), each audio stream (A_ES) in the data of one unit (UNIT) includes audio data which is encoded by a variable bit rate (VBR), and the time information can include a decode time stamp (DTS) of the audio data. In this case, new time information (new DTSb = DTS6 - T in FIG. 3) corresponding to the header (HDR) of the data of one unit (UNITb) to which no time information (DTS) is appended is calculated by correcting the immediately succeeding time information (DTS6 in FIG. 3) by time information (T = DS/TR) obtained by dividing a data size (DS) between the position of the immediately succeeding time information (DTS6 in FIG. 3) and the position of the header (HDR) of the data of one unit (UNITb) to which no time information (DTS) is appended by the constant transfer rate (TR) (arrowed route d2 in FIG. 3).
(7) The data of one unit (UNIT) is transferred at a predetermined constant transfer rate (TR), each audio stream (A_ES) in the data of one unit (UNIT) includes audio data which is encoded by a variable bit rate (VBR), and the time information can include a decode time stamp (DTS) of the audio data. In this case, new time information (new DTSb = new DTSa + T in FIG. 3) corresponding to the header (HDR) of the data of one unit (UNITb) to which no time information (DTS) is appended is calculated by correcting time information (new DTSa in FIG. 3) of the header of immediately preceding data of one unit (UNITa in FIG. 3) by time information (T = DS*/TR) obtained by dividing a data size (DS*) of the data of one unit (UNIT) by the constant transfer rate (TR) (arrowed route e2 in FIG. 3).
(8) The data of one unit (UNIT) can include a plurality of different types of compression-encoded audio data (AC-3, MLP, MPEG1, MPEG2, L-PCM, DTS-HD, DD+, etc.), and padding data which is padded to set the data of one unit (UNIT) to have a constant size. In this way, even when the data of one unit (UNIT) includes variable bit-rate (VBR) data, the data of one unit (UNIT) can be transferred at a constant bit rate (CBR) as a whole.
(9) A playback apparatus which plays back recorded information from an information medium (100 or 11) on which information is recorded to have data obtained by packing a plurality of audio streams (A_ES) together with a playback or decode start time information (PTS or DTS) as data of one unit (UNIT), is configured to comprise an information reading unit (12 to 14, 20 to 22) configured to read the recorded information from the information medium (100 or 11) and to extract the time information (PTS or DTS) and the audio streams (A_ES) in the data of one unit (UNIT), a time correction unit (30: its processing contents are shown in FIG. 4 or 5) configured to generate new time information (new PTS or new DTS) by correcting the time information (PTS or DTS) extracted by the information reading unit, and an output control unit (31 to 33) configured to execute output control of the audio streams (A_ES) in the data of one unit (UNIT) extracted by the information reading unit using the new time information (new PTS or new DTS) corrected by the time correction unit.
   In this playback apparatus, when the time information (PTS or DTS) is not appended to the header of the data of one unit (e.g., HDR of UNITb in FIG. 2 or 3), the time correction unit (30) generates the new time information (new PTS or new DTS) by the following calculation process:
   (9.1) new time information (new PTSb in FIG. 2 or new DTSb in FIG. 3) corresponding to the header (HDR) of the data of one unit (UNITb) to which no time information (PTS or DTS) is appended is calculated from the time information (PTS2 in FIG. 2 or DTS5 in FIG. 3) immediately before the header (HDR) of the data of one unit (UNITb) to which no time information (PTS or DTS) is appended (arrowed route c1 in FIG. 2 or arrowed route c2 in FIG. 3; ST24 to ST28 in FIG. 4 or NO in ST53 and ST54 to ST58 in FIG. 5);
   (9.2) new time information (new PTSb in FIG. 2 or new DTSb in FIG. 3) corresponding to the header (HDR) of the data of one unit (UNITb) to which no time information (PTS or DTS) is appended is calculated from the time information (PTS3 in FIG. 2 or DTS6 in FIG. 3) immediately after the header (HDR) of the data of one unit (UNITb) to which no time information (PTS or DTS) is appended (arrowed route d1 in FIG. 2 or arrowed route d2 in FIG. 3; ST24 to ST28 in FIG. 4 or NO in ST53 and ST54 to ST58 in FIG. 5); or
   (9.3) new time information (new PTSb in FIG. 2 or new DTSb in FIG. 3) corresponding to the header (HDR) of the data of one unit (UNITb) to which no time information (PTS or DTS) is appended is calculated from time information (new PTSa calculated from PTS0 or PTS1 in FIG. 2; new DTSa calculated from DTS0 or DTS1 in FIG. 3) of a header (HDR) of data of one unit (UNITa in FIG. 2 or 3) immediately before the data of one unit (UNITb) to which no time information (PTS or DTS) is appended (arrowed route e1 in FIG. 2 or arrowed route e2 in FIG. 3; YES in ST53 and ST55 to ST59 in FIG. 5).
(10) An output apparatus which processes and outputs information corresponding to data obtained by packing a plurality of audio streams (A_ES) together with playback or decode start time information (PTS or DTS) as data of one unit (UNIT), is configured to comprise an information extraction unit (14, 20 to 22) configured to extract the time information (PTS or DTS) and the audio streams (A_ES) in the data of one unit (UNIT) from the information, a time correction unit (30: its processing contents are shown in FIG. 4 or 5) configured to generate new time information (new PTS or new DTS) by correcting the time information (PTS or DTS) extracted by the information extraction unit, an output control unit (31 to 33) configured to execute output control of the audio streams (A_ES) in the data of one unit (UNIT) extracted by the information extraction unit using the new time information (new PTS or new DTS) corrected by the time correction unit, and an interface unit (34) configured to externally output the audio streams (A_ES) in the data of one unit (UNIT) which has undergone the output control. In this output apparatus, when the time information (PTS or DTS) is not appended to a header of the data of one unit (e.g., HDR of UNITb in FIG. 2 or 3), the time correction unit (30) generates the new time information (new PTS or new DTS) by the following calculation process:
   (10.1) new time information (new PTSb in FIG. 2 or new DTSb in FIG. 3) corresponding to the header (HDR) of the data of one unit (UNITb) to which no time information (PTS or DTS) is appended is calculated from the time information (PTS2 in FIG. 2 or DTS5 in FIG. 3) immediately before the header (HDR) of the data of one unit (UNITb) to which no time information (PTS or DTS) is appended (arrowed route c1 in FIG. 2 or arrowed route c2 in FIG. 3; ST24 to ST28 in FIG. 4 or NO in ST53 and ST54 to ST58 in FIG. 5);
   (10.2) new time information (new PTSb in FIG. 2 or new DTSb in FIG. 3) corresponding to the header (HDR) of the data of one unit (UNITb) to which no time information (PTS or DTS) is appended is calculated from the time information (PTS3 in FIG. 2 or DTS6 in FIG. 3) immediately after the header (HDR) of the data of one unit (UNITb) to which no time information (PTS or DTS) is appended (arrowed route d1 in FIG. 2 or arrowed route d2 in FIG. 3; ST24 to ST28 in FIG. 4 or NO in ST53 and ST54 to ST58 in FIG. 5); or
   (10.3) new time information (new PTSb in FIG. 2 or new DTSb in FIG. 3) corresponding to the header (HDR) of the data of one unit (UNITb) to which no time information (PTS or DTS) is appended is calculated from time information (new PTSa calculated from PTS0 or PTS1 in FIG. 2; new DTSa calculated from DTS0 or DTS1 in FIG. 3) of a header (HDR) of data of one unit (UNITa in FIG. 2 or 3) immediately before the data of one unit (UNITb) to which no time information (PTS or DTS) is appended (arrowed route e1 in FIG. 2 or arrowed route e2 in FIG. 3; YES in ST53 and ST55 to ST59 in FIG. 5).

Note that the invention is not limited to the aforementioned embodiments, and various modifications may be made without departing from the spirit and scope of the invention when it is practiced. For example, a data unit (UNITa, UNITb, etc.) shown in FIG. 2 or 3 may include CBR and VBR audio streams together. Also, an embodiment in which a data unit (UNITa, UNITb, etc.) includes information (image data, computer data, etc.) other than audio data is available.

## Claims

1. An audio stream processing method, which transfers data of one unit (UNIT) obtained by packing a plurality of audio streams (A_ES) together with playback or decode start time information (PTS or DTS),
**characterized in that** when the time information (PTS or DTS) is not appended to a header (HDR) of the data of one unit,
new time information (new PTSb or new DTSb) corresponding to the header (HDR) of the data of one unit (UNITb), to which the time information (PTS or DTS) is not appended, is calculated from time information (PTS2 or DTS5) immediately before the header (HDR) of the data of one unit (UNITb) to which the time information (PTS or DTS) is not appended (ST24 to ST28 or NO in ST53 and ST54 to ST58),
new time information (new PTSb or new DTSb) corresponding to the header (HDR) of the data of one unit (UNITb), to which the time information (PTS or DTS) is not appended, is calculated from time information (PTS3 or DTS6) immediately after the header (HDR) of the data of one unit (UNITb) to which the time information (PTS or DTS) is not appended (ST24 to ST28 or NO in ST53 and ST54 to ST58), or
new time information (new PTSb or new DTSb) corresponding to the header (HDR) of the data of one unit (UNITb), to which the time information (PTS or DTS) is not appended, is calculated from time information (new PTSa or new DTSa) of a header (HDR) of data of one unit (UNITa) immediately before the data of one unit (UNITb) to which the time information (PTS or DTS) is not appended (YES in ST53 and ST55 to ST59).

2. The method according to claim 1, **characterized in that** the data of one unit (UNIT) is transferred at a predetermined constant transfer rate (TR), each audio stream (A_ES) in the data of one unit (UNIT) includes audio data which is encoded by a constant bit rate (CBR), and the time information includes a presentation time stamp (PTS) of the audio data, and
new time information (new PTSb = PTS2 + T) corresponding to the header (HDR) of the data of one unit (UNITb) to which the time information (PTS) is not appended is calculated by correcting the immediately preceding time information (PTS2) by time information (T = DS/TR) obtained by dividing a data size (DS) between a position of the immediately preceding time information (PTS2) and a position of the header (HDR) of the data of one unit (UNITb) to which the time information (PTS) is not appended by the constant transfer rate (TR).

3. The method according to claim 1, **characterized in that** the data of one unit (UNIT) is transferred at a predetermined constant transfer rate (TR), each audio stream (A_ES) in the data of one unit (UNIT) includes audio data which is encoded by a constant bit rate (CBR), and the time information includes a presentation time stamp (PTS) of the audio data, and
new time information (new PTSb = PTS3 - T) corresponding to the header (HDR) of the data of one unit (UNITb) to which the time information (PTS) is not appended is calculated by correcting the immediately succeeding time information (PTS3) by time information (T = DS/TR) obtained by dividing a data size (DS) between a position of the immediately succeeding time information (PTS3) and a position of the header (HDR) of the data of one unit (UNITb) to which the time information (PTS) is not appended by the constant transfer rate (TR).

4. The method according to claim 1, **characterized in that** the data of one unit (UNIT) is transferred at a predetermined constant transfer rate (TR), each audio stream (A_ES) in the data of one unit (UNIT) includes audio data which is encoded by a constant bit rate (CBR), and the time information includes a presentation time stamp (PTS) of the audio data, and
new time information (new PTSb = new PTSa + T) corresponding to the header (HDR) of the data of one unit (UNITb) to which the time information (PTS) is not appended is calculated by correcting time information (new PTSa) of a header (HDR) of immediately preceding data of one unit (UNITa) by time information (T = DS*/TR) obtained by dividing a data size (DS*) of the data of one unit (UNIT) by the constant transfer rate (TR).

5. The method according to claim 1, **characterized in that** the data of one unit (UNIT) is transferred at a predetermined constant transfer rate (TR), each audio stream (A_ES) in the data of one unit (UNIT) includes audio data which is encoded by a variable bit rate (VBR), and the time information includes a decode time stamp (DTS) of the audio data, and
new time information (new DTSb = DTS5 + T) corresponding to the header (HDR) of the data of one unit (UNITb) to which the time information (DTS) is not appended is calculated by correcting the immediately preceding time information (DTS5) by time information (T = DS/TR) obtained by dividing a data size (DS) between a position of the immediately preceding time information (DTS5) and a position of the header (HDR) of the data of one unit (UNITb) to which the time information (DTS) is not appended by the constant transfer rate (TR).

6. The method according to claim 1, **characterized in that** the data of one unit (UNIT) is transferred at a predetermined constant transfer rate (TR), each audio stream (A_ES) in the data of one unit (UNIT) includes audio data which is encoded by a variable bit rate (VBR), and the time information includes a decode time stamp (DTS) of the audio data, and
new time information (new DTSb = DTS6 - T) corresponding to the header (HDR) of the data of one unit (UNITb) to which the time information (DTS) is not appended is calculated by correcting the immediately succeeding time information (DTS6) by time information (T = DS/TR) obtained by dividing a data size (DS) between a position of the immediately succeeding time information (DTS6) and a position of the header (HDR) of the data of one unit (UNITb) to which the time information (DTS) is not appended by the constant transfer rate (TR).

7. The method according to claim 1, **characterized in that** the data of one unit (UNIT) is transferred at a predetermined constant transfer rate (TR), each audio stream (A_ES) in the data of one unit (UNIT) includes audio data which is encoded by a variable bit rate (VBR), and the time information includes a decode time stamp (DTS) of the audio data, and
new time information (new DTSb = new DTSa + T) corresponding to the header (HDR) of the data of one unit (UNITb) to which the time information (DTS) is not appended is calculated by correcting time information (new DTSa) of a header (HDR) of immediately preceding data of one unit (UNITa) by time information (T = DS*/TR) obtained by dividing a data size (DS*) of the data of one unit (UNIT) by the constant transfer rate (TR).

8. The method according to claim 1, **characterized in that** the data of one unit (UNIT) includes a plurality of different types of compression-encoded audio data, and padding data which is padded to set the data of one unit (UNIT) to be of a constant size.

9. A playback apparatus which plays back recorded information from an information medium (100 or 11) on which information is recorded to with data obtained by packing a plurality of audio streams (A_ES) together with a playback or decode start time information (PTS or DTS) being data of one unit (UNIT), the apparatus
**characterized by** comprising:
an information reading unit (12 to 14, 20 to 22) configured to read the recorded information from the information medium (100 or 11) and to extract the time information (PTS or DTS) and the audio streams (A_ES) in the data of one unit (UNIT);
a time correction unit (30) configured to generate new time information (new PTS or new DTS) by correcting the time information (PTS or DTS) extracted by the information reading unit; and
an output control unit (31 to 33) configured to execute output control of the audio streams (A_ES) in the data of one unit (UNIT) extracted by the information reading unit using the new time information (new PTS or new DTS) corrected by the time correction unit,
wherein when the time information (PTS or DTS) is not appended to a header of the data of one unit, the time correction unit (30) generates the new time information (new PTS or new DTS) by one of the following calculation processes of:
calculating new time information (new PTSb or new DTSb) corresponding to the header (HDR) of the data of one unit (UNITb) to which the time information (PTS or DTS) is not appended from the time information (PTS2 or DTS5) immediately before the header (HDR) of the data of one unit (UNITb) to which the time information (PTS or DTS) is not appended ST24 to ST28 or NO in ST53 and ST54 to ST58);
calculating new time information (new PTSb or new DTSb) corresponding to the header (HDR) of the data of one unit (UNITb) to which the time information (PTS or DTS) is not appended from the time information (PTS3 or DTS6) immediately after the header (HDR) of the data of one unit (UNITb) to which the time information (PTS or DTS) is not appended (ST24 to ST28 or NO in ST53 and ST54 to ST58); and
calculating new time information (new PTSb or new DTSb) corresponding to the header (HDR) of the data of one unit (UNITb) to which the time information (PTS or DTS) is not appended from time information of a header (HDR) of data of one unit (UNITa) immediately before the data of one unit (UNITb) to which the time information (PTS or DTS) is not appended (YES in ST53 and ST55 to ST59).

10. An output apparatus which processes and outputs information corresponding to data obtained by packing a plurality of audio streams (A_ES) together with playback or decode start time information (PTS or DTS) as data of one unit (UNIT), the apparatus **characterized by** comprising:
an information extraction unit (14, 20 to 22) configured to extract the time information (PTS or DTS) and the audio streams (A_ES) in the data of one unit (UNIT) from the information;
a time correction unit (30) configured to generate new time information (new PTS or new DTS) by correcting the time information (PTS or DTS) extracted by the information extraction unit;
an output control unit (31 to 33) configured to execute output control of the audio streams (A_ES) in the data of one unit (UNIT) extracted by the information extraction unit using the new time information (new PTS or new DTS) corrected by the time correction unit; and
an interface unit (34) configured to externally output the audio streams (A_ES) in the data of one unit (UNIT) which has undergone the output control,
wherein when the time information (PTS or DTS) is not appended to a header (HDR) of the data of one unit, the time correction unit (30) generates the new time information (new PTS or new DTS) by one of the following calculation processes of:
calculating new time information (new PTSb or new DTSb) corresponding to the header (HDR) of the data of one unit (UNITb) to which the time information (PTS or DTS) is not appended from the time information (PTS2 or DTS5) immediately before the header (HDR) of the data of one unit (UNITb) to which the time information (PTS or DTS) is not appended ST24 to ST28 or NO in ST53 and ST54 to ST58);
calculating new time information (new PTSb or new DTSb) corresponding to the header (HDR) of the data of one unit (UNITb) to which the time information (PTS or DTS) is not appended from the time information (PTS3 or DTS6) immediately after the header (HDR) of the data of one unit (UNITb) to which the time information (PTS or DTS) is not appended (ST24 to ST28 or NO in ST53 and ST54 to ST58); and
calculating new time information (new PTSb or new DTSb) corresponding to the header (HDR) of the data of one unit (UNITb) to which the time information (PTS or DTS) is not appended from time information of a header (HDR) of data of one unit (UNITa) immediately before the data of one unit (UNITb) to which the time information (PTS or DTS) is not appended (YES in ST53 and ST55 to ST59).
